# EUROPEAN PATENT APPLICATION

(11) **EP 3 113 459 A1**
(43) Date of publication of application: **04.01.2017**
(21) Application number: 15306030.6
(22) Date of filing: 29.06.2015
(51) Int. Cl.: H04L 29/12, H04W 64/00

(54) **METHOD FOR MANAGING A LOCAL NETWORK**

(71) Applicant: Orange, 75015 Paris (FR)
(72) Inventor: Le Goff, Mikael, 29890 Kerlouan (FR); Derham, Thomas, Tokyo, 194-0022 (JP)
(74) Representative: Regimbeau

(57) **Abstract**

The present invention relates to a method for managing a local network (10) connecting at least one electronic device (1 a, 1 b), the method comprising performing by a processing unit (11) of the device (1a, 1 b) steps of:
(a) obtaining an identifier of at least one nearby beacon (3a, 3b);
(b) for at least one nearby beacon (3a, 3b) for which an identifier has been obtained, obtaining a location parameter associated with said identifier of the nearby beacon (3a, 3b), each location parameter representing a location of the nearby beacon (3a, 3b);
(c) amending a hostname of the device (1a, 1 b) based on the at least one location parameter obtained.

## Description

### FIELD OF THE INVENTION

The field of this invention is that of IP networks.

More particularly, the invention relates to a method for managing a local network.

### BACKGROUND OF THE INVENTION

Electronic devices with integrated network capabilities are still becoming increasingly numerous. Generally named "IP devices" (for Internet Protocol devices), they are able to join local networks and may act as "clients" with one or more "servers" in the network, so as to receive/send data to/from other devices of the network. As an example, the client device may be a media player connected to a domestic Local Area Network (LAN) whose server is a local media server from which media files are served to the media player.

To this end, a client device trying to join the network may undergo "registration" proceedings, generally according to the Dynamic Host Control Protocol (DHCP). Thus, the client may broadcast a DHCP DISCOVER request, including the "hostname" of the device, so as to be offered Internet Protocol parameters, such as an IP address, by a DHCP server on the network. This DHCP server may maintain a "leases list" which comprises a list of the IP addresses assigned to devices on the network together with device identifiers including, for example, their MAC address and hostname. Further, the DHCP server may exchange information in this "leases list" with network discovery servers such as a local DNS server.

Then, other computers and devices on the network may send a query to the local DNS server containing the hostname of another device, and the DNS server will respond with the IP address of that device. This makes it easier to share data.

In addition to DNS, various other mechanisms are also commonly used by devices to mutually discover each other and the services each provides. For example, Zeroconf (one implementation of which is part of Apple's Bonjour protocol) uses mDNS (multicast DNS) requests which a device broadcasts on the local network. Other devices on the network that match the request (e.g. the hostname) respond, and hence the first device discovers those other devices without the requirement for a centralized server. Another example is SSDP (one implementation of which is part of the UPnP protocol), which similarly uses multicast transmissions to allow mutual discovery of devices by device name, services provided, etc. A further example is NetBIOS name resolution, which can use both decentralized multicast transmissions and/or a semi-statically elected Master Browser device to assist discovery of devices by NetBIOS name.

Irrespective of the protocol used for device discovery, a difficulty that frequently arises is to set the "hostname" (which may be known as "device name", "NetBIOS name" etc depending on the protocol) in such a way that it is easy for the user, or an application running on the user's device, to recognize a particular device among a plurality of devices connected to a network. For example, devices typically set their hostname to a generic descriptor (e.g. "TV_IP_1"), device model number (e.g. "RTV-3000N") which is often confusing for the user, particularly when multiple similar (or even identical, in terms of make/model) devices are connected to the network.

Thus, it could be difficult to send data to the right one. For example, several IP TVs may be visible to an electronic device that has content to forward to it.

To solve this problem, the patent US8645509 proposes a method of automatic hostname configuration in which a hostname is formed including at least a location identifier representing a location at which the client device is located.

In this method, a hostname control server collects location information regarding the connected devices, and tries to improve their hostname.

This method is generally efficient, but location may be approximate as location information comes from various sources and is not always available.

There is a need for another automatic method which is more reliable and aims at a better location possible, hence improving device discovery.

### SUMMARY OF THE INVENTION

For these purposes, the present invention provides a method for managing a local network connecting at least one electronic device, the method comprising performing by a processing unit of the device steps of:
(a) obtaining an identifier of at least one nearby beacon;
(b) for at least one nearby beacon for which an identifier has been obtained, obtaining a location parameter associated with said identifier of the nearby beacon, each location parameter representing a location of the nearby beacon;
(c) amending a hostname of the device based on the at least one location parameter obtained.

The use of beacons offers numerous advantages: a systematic and very precise location is obtained, and each electronic device can autonomously (i.e. without the help of a gateway) determine its location, and the meaningful name it should have.

Preferred but non limiting features of the present invention are as follow:
- a gateway stores configuration information of the network, step (c) comprising sending to the gateway a request for amending said hostname of the device;
- step (a) comprises scanning for existing beacons so as to detect at least one nearby beacon, and receiving the identifier of at least one of the nearby beacon;
- step (a) comprises identifying the closest beacon among the detected nearby beacons, and receiving the identifier of the closest beacon;
- the closest beacon is identified based on signal strength;
- step (a) comprises receiving the identifier of each detected nearby beacon, step (b) being performed for each detected nearby beacon;
- the received identifier of a nearby beacon is sent by this nearby beacon through Short-Range communication;
- a plurality of location parameters is obtained at step (b), step (c) comprising generating a global location parameter representing a location of the device as a function of the obtained location parameters, amending said hostname of the device being based on said global location parameter;
- said location parameter is a string;
- step (c) comprises concatenating the current hostname of the device with said global location parameter;
- generating a global location parameter is further function of signal strength associated with each nearby beacon;
- each location parameter is either retrieved from a beacon managing server, or determined from said associated identifier.

In a second aspect, the invention provides an electronic device, characterized in that it comprises a processing unit configured to implement, when the device is connected to a local network:
- obtaining an identifier of at least one nearby beacon;
- for at least one nearby beacon for which an identifier has been obtained, obtaining a location parameter associated with said identifier of the nearby beacon, each location parameter representing a location of the nearby beacon;
- amending a hostname of the device based on the at least one location parameter obtained.

According to a third and a fourth aspects, the invention provides a computer program product, comprising code instructions for executing a method according to the first aspect for managing a local network; and a computer-readable medium, on which is stored a computer program product comprising code instructions for executing a method according to the first aspect for managing a local network.

### BRIEF DESCRIPTION OF THE DRAWINGS

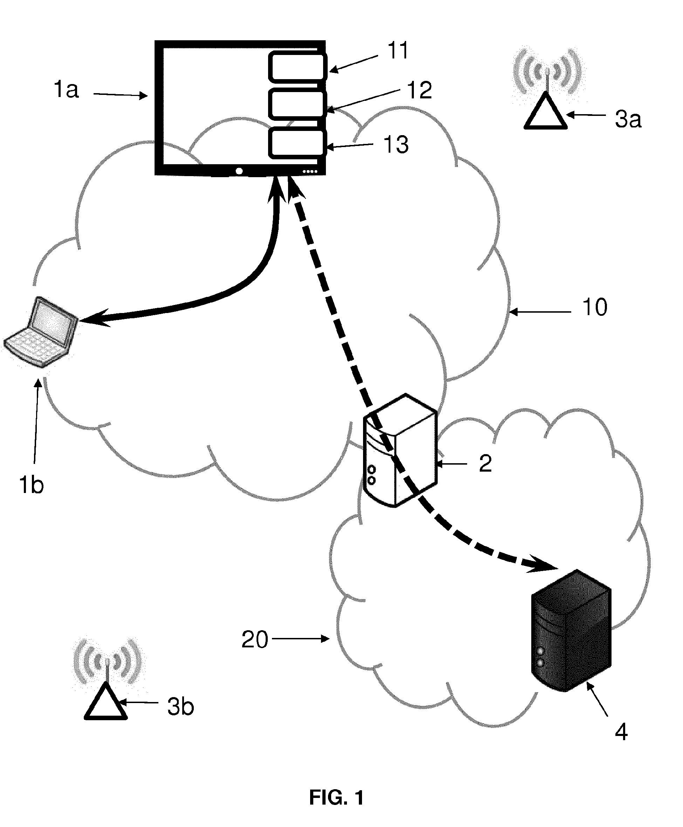

The above and other objects, features and advantages of this invention will be apparent in the following detailed description of an illustrative embodiment thereof, which is to be read in connection with the accompanying figure 1 illustrating an example of network architecture in which the method according to the invention is performed.

### DETAILED DESCRIPTION OF A PREFERRED EMBODIMENT

### Network

The present invention relates to a method for managing a local network 10.

As represented by figure 1, the local network 10 is typically a Local Area Network within a Wide Area Network 20 (for example Internet), for example the network of a company, a domestic network, the network of a set of buildings, etc.

The local network 10 connects a plurality of electronic devices 1 (computers, mobile terminals, touch tablets, televisions, speakers, printers, sensors, networking equipment such as routers, etc.) which may be at a same location or disseminated (in case for example of a virtual private network). At least one of the electronic devices may be a "gateway" which provides other devices 1 with access to the networks 10, 20. The gateway 2 is for example the IAD of a home, providing internet access to domestic equipment, a dedicated computer of the network 10, one or more routers, etc.

The gateway 2 stores in particular (on a storage unit, i.e. a memory such as a hard drive or flash) configuration information of the network 10, such as hostnames of connected devices 1 a, 1 b.

Each device 1 comprises a processing unit 11, typically a processor, a network connection unit 13 (for example a Wi-Fi module, an Ethernet interface, etc.), and generally a storage unit 12.

The figure 1 represents an example of network 10 in which the gateway 2 provides internet access to two devices 1 a, 1 b, the first device 1 a being an IP TV and the second device 1 b being a computer. In the following description will be presented the example of a company network.

Using network discovery, a user of a device (in our example the user of the computer 1 b) is provided with a list of other connected devices within the network 10 (in our example the IP TV 1 a). If there is a large number of similar devices (in the case of a company network, there may are a plurality of IP TV located in various rooms), the user would like to recognize immediately the right device.

The present method is performed by a processing unit 11 of the device 1a, 1b, and aims at automatically providing devices 1a, 1b of the network 10 with meaningful names, in particular names representative of a location of the device, for searching purposes.

### Beacons

The present method starts with a step (a) of obtaining an identifier of at least one nearby beacon 3a, 3b.

By "beacon" it is meant a class of hardware transmitters (generally low energy equipment arranged at predetermined positions) used to determine the physical location of other devices. Beacons are associated with a unique identifier which can be transmitted to nearby devices, generally with a Short-Range wireless technology such as Bluetooth.

Beacons are cheap and nowadays widespread. A building can be easily meshed with beacons (even temporary, in the case of a conference) so as to allow performing the present method.

A beacon managing server 4 (typically a server of the wide area network 20) generally stores a list of unique identifiers of beacons 3a, 3b each associated with a location parameter representing a location of the nearby beacon 3a, 3b. The location parameter may be a name of the location (a string), for example "FLOOR2_OFFICE19", GPS coordinates, or any meaningful data enabling to define a location.

The unique identifier can be transmitted upon request. Alternatively, "iBeacons" are a type of beacons periodically broadcasting their unique identifier.

Consequently the step (a) advantageously comprises scanning for existing beacons 3a, 3b so as to detect at least one nearby beacon 3a, 3b, and receiving the identifier of at least one of the nearby beacon 3a, 3b, preferably directly from this nearby beacon 3a, 3b through Short-Range communication.

The presently method may be performed by a device 1 a, 1b each time it is connected to the network (for example when a conference is set up), or each time new beacons 3 are detected (for example if devices are moved).

When a plurality of nearby beacons is detected, two alternative behaviors may be performed by the processing unit 11 of the device 1 a, 1 b:
- Either step (a) comprises identifying the closest beacon 3a among the detected nearby beacons 3a, 3b, and receiving the identifier of the closest beacon 3a. In other words, a single beacon 3 is chosen by the device 1a, 1b, and only its unique identifier is used. This closest beacon 3a can be identified based on signal strength. This example is represented by figure 1 (in which beacon 3a is closer than beacon 3b), and reveals to be very computationally efficient while keeping an excellent location accuracy.
- Or step (a) comprises receiving the identifier of each detected nearby beacon 3a, 3b (or at least a plurality of them), and this plurality of unique identifier will be used together. As it will be explained, this embodiment allows the best location accuracy. It is to be noted that the nearby beacons may be sorted by signal strength.

In other words, in the embodiment "closest beacon", the step (a) comprises scanning for existing beacons 3a, 3b so as to detect at least one nearby beacon 3a, 3b, identifying the closest beacon 3a among the detected nearby beacons 3a, 3b, and receiving the identifier of the closest beacon 3a, preferably directly from this closest beacon 3a, 3b through Short-Range communication.

In the embodiment "several beacons", the step (a) comprises scanning for existing beacons 3a, 3b so as to detect a plurality of nearby beacons 3a, 3b, and receiving the identifier of each nearby beacon 3a, 3b, preferably directly from this closest beacon 3a, 3b through Short-Range communication.

### Location parameter

In a further step (b), for at least one nearby beacon 3a, 3b for which an identifier has been obtained (advantageously step (b) is performed for each detected nearby beacon 3a, 3b) is obtained the location parameter associated with said identifier of the nearby beacon 3a, 3b. If there is a beacon managing server 4, the location parameter associated with said identifier of the nearby beacon 3a, 3b is retrived from the beacon managing server 4. Alternativeley, the location parameter may be determined (for example extracted) directly from the unique identifier.

In the first case, for each unique identifier taken into account, the device 1a, 1b sends a request to the beacon managing server 4, this request comprising the unique identifier (or a single request comprising all the unique identifiers). In return, the beacon managing server 4 sends the associated location parameter(s).

In the second case, the processing unit 11 of the device 1 processes the unique identifiers received so as to for example decipher these identifiers and reconstitutes GPS coordinates.

### Alteration of the hostname

Thanks to the location parameter, the hostname of the device 1a is finally altered so as to reflect its location.

More precisely, step (c) comprises amending a hostname of the device 1a, 1b based on the at least one location parameter obtained (retrieved or determined). This step may either be performed directly by the device 1 a, 1 b, or upon request by a gateway 2 so as to amend the stored network information (including the hostnames). In the latter case, the device sends a request for amending its hostname, this request comprising for example the new name determined, or the location parameter(s).

If there is a single location parameter ("closest beacon" embodiment), the location parameter may be a string, and step (c) simply comprises concatenating the current hostname of the device with said location parameter.

For example, the hostname "IP_TV_1" becomes 'IP_TV_1_ FLOOR2-OFFICE19", which is more meaningful for a user of the device 1b trying to choose an IP TV for displaying data.

If there is a plurality of location parameters, each of them could be concatenated.

Alternatively, for avoiding very long names, step (c) may comprise generating a global location parameter representing a location of the device 1a, 1b as a function of the retrieved location parameters, amending said hostname of the device 1a, 1b being based on said global location parameter. In the case of sending request to the gateway 2, said request for amending a hostname of the device 1 comprises said global location parameter (and/or directly the new hostname).

For example, a common string may be generated taking into account each string. For example, if both location parameters comprises "FLOOR2", this part will not be repeated, so as to simply the global name.

It has to be noted that the global location parameter can further function of signal strength associated with each nearby beacon 3a, 3b, so as balance the importance of each beacon and precisely identify the location of the device 1 a, 1b, in particular if each location parameter is a GPS coordinate: therefore, highly precise triangulation may be performed so as to exactly locate the device on a map.

### Device and computer program

In a second aspect, the present invention concerns an electronic device 1 a, 1b, adapted for carrying out the method for managing a local network 10 as previously described.

The device 1 a, 1 b, which is generally a computer, a mobile terminal, a touch tablet, a television, a speaker system, a printer, a sensor, a networking equipment, etc., typically comprises a processing unit 11, a communication unit 13 and a storage unit 12.

Said processing unit 11 is configured to implement, when the device 1 a, 1 b is connected to a local network 10 (which may comprise a gateway 2 storing configuration information of the network 10):
- obtaining an identifier of at least one nearby beacon 3a, 3b (in particular through Short-Range communication with the beacon 3a, 3b);
- for at least one nearby beacon 3a, 3b for which an identifier has been obtained, obtaining (for example retrieving from a beacon managing server 4) a location parameter associated with said identifier of the nearby beacon 3a, 3b, each location parameter representing a location of the nearby beacon 3a, 3b;
- amending a hostname of the device (1 a, 1b) based on the at least one location parameter obtained, in particular by sending to the gateway 2 a request.

The invention further proposes a computer program product, comprising code instructions for executing (in particular with a processing unit 11 of the device 1 a) a method according to the first step of the invention for managing a local network 10; and a computer-readable medium (in particular a memory 12 of the device 1a), on which is stored a computer program product comprising code instructions for executing said method.

## Claims

1. A method for managing a local network (10) connecting at least one electronic device (1 a, 1 b), the method comprising performing by a processing unit (11) of the device (1 a, 1 b) steps of:
(a) obtaining an identifier of at least one nearby beacon (3a, 3b);
(b) for at least one nearby beacon (3a, 3b) for which an identifier has been obtained, obtaining a location parameter associated with said identifier of the nearby beacon (3a, 3b), each location parameter representing a location of the nearby beacon (3a, 3b);
(c) amending a hostname of the device (1 a, 1 b) based on the at least one location parameter obtained.

2. A method according to claim 1, wherein a gateway (2) stores configuration information of the network (10), step (c) comprising sending to the gateway (2) a request for amending said hostname of the device (1 a, 1 b).

3. A method according to any one of claims 1 and 2, wherein step (a) comprises scanning for existing beacons (3a, 3b) so as to detect at least one nearby beacon (3a, 3b), and receiving the identifier of at least one of the nearby beacon (3a, 3b).

4. A method according to claim 3, wherein step (a) comprises identifying the closest beacon (3a) among the detected nearby beacons (3a, 3b), and receiving the identifier of the closest beacon (3a).

5. A method according to claim 4, wherein the closest beacon (3a) is identified based on signal strength.

6. A method according to claim 3, wherein step (a) comprises receiving the identifier of each detected nearby beacon (3a, 3b), step (b) being performed for each detected nearby beacon (3a, 3b).

7. A method according to any one of claims 3 to 6, wherein the received identifier of a nearby beacon (3a, 3b) is sent by this nearby beacon (3a, 3b) through Short-Range communication.

8. A method according to any one of claims 1 to 7, wherein a plurality of location parameters is obtained at step (b), step (c) comprising generating a global location parameter representing a location of the device (1 a, 1b) as a function of the obtained location parameters, amending the hostname of the device (1a, 1b) being based on said global location parameter.

9. A method according to claim 8, wherein said location parameter is a string.

10. A method according to claim 9, wherein step (c) comprises concatenating the current hostname of the device with said global location parameter.

11. A method according to any one of claims 8 to 10, wherein generating a global location parameter is further function of signal strength associated with each nearby beacon (3a, 3b).

12. A method according to any one of claims 1 to 11, wherein each location parameter is either retrieved from a beacon managing server (4), or determined from said associated identifier.

13. An electronic device (1a, 1b), **characterized in that** it comprises a processing unit (11) configured to implement, when the device (1a, 1b) is connected to a local network (10):
- obtaining an identifier of at least one nearby beacon (3a, 3b);
- for at least one nearby beacon (3a, 3b) for which an identifier has been obtained, obtaining a location parameter associated with said identifier of the nearby beacon (3a, 3b), each location parameter representing a location of the nearby beacon (3a, 3b);
- amending a hostname of the device (1 a, 1b) based on the at least one location parameter obtained.

14. A computer program product, comprising code instructions for executing a method according to any one of claims 1 to 12 for managing a local network (10).

15. A computer-readable medium, on which is stored a computer program product comprising code instructions for executing a method according to any one of claims 1 to 12 for managing a local network (10).
